# EUROPEAN PATENT APPLICATION

(11) **EP 4 742 237 A1**
(43) Date of publication of application: **13.05.2026**
(21) Application number: 25211930.0
(22) Date of filing: 29.10.2025
(51) Int. Cl.: G10L 15/26, G10L 15/18, G10L 15/22

(54) **TEXT CONVERSION METHOD FOR VOICE DATA, INFORMATION PROCESSING DEVICE, AND NON-TRANSITORY STORAGE MEDIUM**

(30) Priority: 12.11.2024 JP 2024197723
(71) Applicant: TOYOTA JIDOSHA KABUSHIKI KAISHA, Toyota-shi, Aichi-ken 471-8571 (JP)
(72) Inventor: MORISHITA, Hirofumi, Toyota-shi, 471-8571 (JP)
(74) Representative: TBK

(57) **Abstract**

A text conversion method for voice data that is executed by an information processing device includes: acquiring voice data; detecting a specific expression in the voice data and feature information relevant to vocalization of the specific expression; converting the specific expression into corresponding standard language, based on the detected specific expression and the detected feature information; and outputting text information relevant to the voice data.

## Description

### BACKGROUND OF THE INVENTION

### 1. Field of the Invention

The present disclosure relates to a text conversion method for voice data, an information processing device, and a non-transitory storage medium.

### 2. Description of Related Art

A technology for analyzing the content of a business talk is known. For example, Japanese Unexamined Patent Application Publication No. 2019-28910 (JP 2019-28910 A) discloses a dialogue analysis system for checking that a sales person has explained matters that should be explained and has not said matters that should not be said, in a business talk with a customer. Further, for example, "Toyama Dialect Recognition and Conversion to Standard Japanese via Deep Learning" (The 38th Annual Conference of the Japanese Society for Artificial Intelligence (2024)) by Horimoto, et al. discloses a voice recognition technology for the Toyama dialect.

### SUMMARY OF THE INVENTION

In JP 2019-28910 A, a technology for analyzing the content of the business talk by machine learning is shown, but in JP 2019-28910 A and "Toyama Dialect Recognition and Conversion to Standard Japanese via Deep Learning" (The 38th Annual Conference of the Japanese Society for Artificial Intelligence (2024)) by Horimoto, et al., the transcription of the voice in the business talk or the like, that is, a text conversion technology for voice data is not mentioned. Particularly, there is room for improvement in a voice transcription technology for voice data that includes non-standard language, such as dialects and accents. Meanwhile, for the analysis, feedback, and others of the content of the business talk or the like, it is desirable to improve the text conversion technology for voice data. Thus, there is room for improvement in the text conversion technology for voice data in business talks and the like.

The present disclosure provides a text conversion technology for voice data.

A text conversion method for voice data that is executed by an information processing device according to a first aspect of the present disclosure includes: acquiring voice data; detecting a specific expression in the voice data and feature information relevant to vocalization of the specific expression; converting the specific expression into corresponding standard language, based on the detected specific expression and the detected feature information; and outputting text information relevant to the voice data.

An information processing device according to a second aspect of the present disclosure includes one or more processors configured to: acquire voice data; detect a specific expression in the voice data and feature information relevant to vocalization of the specific expression; convert the specific expression into corresponding standard language, based on the detected specific expression and the detected feature information; and output text information relevant to the voice data.

A non-transitory storage medium according to a fourth aspect of the present disclosure stores instructions that are executable by one or more processors and that cause the one or more processors to perform functions including: acquiring voice data; detecting a specific expression in the voice data and feature information relevant to vocalization of the specific expression; converting the specific expression into corresponding standard language, based on the detected specific expression and the detected feature information; and outputting text information relevant to the voice data.

With an embodiment of the present disclosure, the text conversion technology for voice data is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a schematic configuration of a system according to the embodiment; and
FIG. 2 is a flowchart showing the operation of an information processing device.

### DETAILED DESCRIPTION OF EMBODIMENTS

An embodiment of the present disclosure will be described below.

### Overview of Embodiment

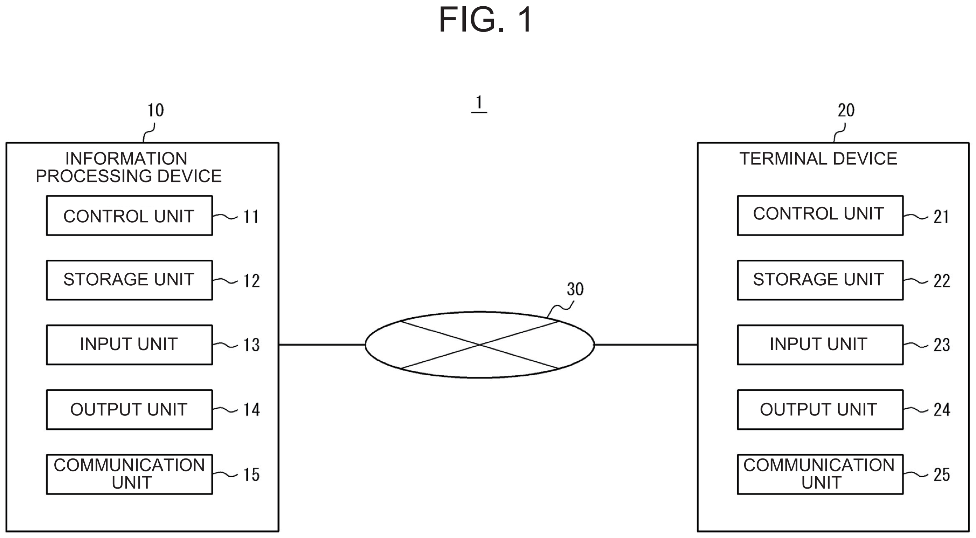

The overview and configuration of a system 1 according to the embodiment will be described with reference to FIG. 1. The system 1 according to the embodiment includes an information processing device 10 and a terminal device 20. The information processing device 10 and the terminal device 20 are communicably connected to a network 30 including a mobile body communication network and the internet, for example.

The information processing device 10 is a server device that is installed in a data center, for example. For example, the information processing device 10 is a server that belongs to a cloud computing system or another computing system. The number of information processing devices 10 included in the system 1 is one as an example shown in FIG. 1, but is not limited to this. The system 1 may include two or more information processing devices 10.

The terminal device 20 is an arbitrary device that is used by a user, such as a business talk staff for vehicle sale. For example, a general-purpose electronic apparatus, such as a personal computer, a smartphone, a tablet terminal, and a wearable terminal, or a dedicated electronic apparatus can be employed as the terminal device 20. The number of terminal devices 20 included in the system 1 is one as an example shown in FIG. 1, but is not limited to this. The system 1 may include two or more terminal devices 20.

First, the overview of a text conversion technology for voice data according to the embodiment will be described, and details will be described later. For example, the voice data may be data about the voice in a business talk. In the embodiment, for example, the business talk is a business talk relevant to vehicle sale, and a provision object relevant to the business talk is a vehicle, although not limited to this. For example, the business talk may include business talks at meetings for various kinds of contract conclusions, such as the sale and purchase of a real estate, the contract of an insurance contract, and the sale of a financial product. Further, the provision object relevant to the business talk in the embodiment may be a product, a service, a digital content, a license, data (information), a financial product, a real estate, an intangible asset, another tradable right, or the like.

The information processing device 10 acquires the voice data. Further, the information processing device 10 detects a specific expression in the voice data and feature information relevant to vocalization of the specific expression. The information processing device 10 converts the specific expression into standard language, based on the detected specific expression and feature information. Then, the information processing device 10 outputs text information relevant to the voice data.

In this way, in the embodiment, the information processing device 10 detects the specific expression in the voice data and the feature information relevant to the vocalization of the specific expression, and converts the specific expression into the standard language, based on the detected specific expression and feature information. Therefore, since the specific expression can be appropriately extracted and can be converted into the standard language, the text conversion technology for voice data is improved.

Next, the configurations of the information processing device 10 and the terminal device 20 will be described in detail.

### Configuration of Information Processing Device 10

As shown in FIG. 1, the information processing device 10 includes a control unit 11, a storage unit 12, an input unit 13, an output unit 14, and a communication unit 15.

The control unit 11 includes at least one processor, at least one dedicated circuit, or a combination of them. The processor is a general-purpose processor, such as a central processing unit (CPU) or a graphics processing unit (GPU), or a dedicated processor for a particular process. For example, the dedicated circuit is a field-programmable gate array (FPGA) or an application specific integrated circuit (ASIC). The control unit 11 executes processes about the operation of the information processing device 10, while controlling parts of the information processing device 10.

The storage unit 12 includes at least one semiconductor memory, at least one magnetic memory, at least one optical memory, or a combination of at least two kinds of them. For example, the semiconductor memory is a random access memory (RAM) or a read only memory (ROM). For example, the RAM is a static random access memory (SRAM) or a dynamic random access memory (DRAM). For example, the ROM is an electrically erasable programmable read only memory (EEPROM). For example, the storage unit 12 functions as a main storage device, an auxiliary storage device, or a cache memory. The storage unit 12 stores data that is used for the operation of the information processing device 10 and data that is obtained by the operation of the information processing device 10.

The input unit 13 includes at least one input interface. Examples of the input interface include a physical key, an electrostatic capacitance key, a pointing device, and a touch screen that is provided integrally with a display. Further, the input interface may be a sound sensor that accepts a voice input, or a camera that accepts a gesture input, for example. The input unit 13 accepts a manipulation for inputting data that is used for the operation of the information processing device 10. The input unit 13 may be connected to the information processing device 10, as an external input apparatus, instead of being included in the information processing device 10. As the connection method, for example, an arbitrary method, such as Universal Serial Bus (USB), High-Definition Multimedia Interface (HDMI (registered trademark)), or Bluetooth (registered trademark), can be used.

The output unit 14 includes at least one output interface. Examples of the output interface include a display that outputs information as a picture and a speaker that outputs information as a voice. Examples of the display include a liquid crystal display (LCD) and an organic electroluminescence (EL) display. The output unit 14 outputs data that is obtained by the operation of the information processing device 10. The output unit 14 may be connected to the information processing device 10, as an external output apparatus, instead of being included in the information processing device 10. As the connection method, for example, an arbitrary method, such as USB, HDMI (registered trademark), or Bluetooth (registered trademark), can be used.

The communication unit 15 includes at least one exterior communication interface. The communication interface may be an interface for wire communication or may be an interface for wireless communication. In the case of wire communication, examples of the communication interface include a Local Area Network (LAN) interface and a Universal Serial Bus (USB) interface. In the case of wireless communication, examples of the communication interface include an interface that complies with a mobile communication standard, such as, Long Term Evolution (LTE), 4th generation (4G) or 5th generation (5G), and an interface that complies with a short-range wireless communication, such as Bluetooth (registered trademark). The communication unit 15 receives data that is used for the operation of the information processing device 10, and sends data that is obtained by the operation of the information processing device 10.

Functions of the information processing device 10 are realized by executing a program according to the embodiment by a processor corresponding to the control unit 11. That is, the functions of the information processing device 10 are realized by software. The program causes a computer to function as the information processing device 10, by causing the computer to execute the operation of the information processing device 10. That is, the computer functions as the information processing device 10, by executing the operation of the information processing device 10 in accordance with the program.

In the embodiment, the program can be recorded in a computer-readable recording medium. The computer-readable recording medium includes a non-transitory computer-readable medium, and for example, is a magnetic recording device, an optical disc, and a magneto-optical recording medium, or a semiconductor memory. For example, the distribution of the program is performed by sale, transfer, or lending of a portable recording medium in which the program is recorded, as exemplified by a digital versatile disc (DVD) or a compact disc read only memory (CD-ROM). Further, the distribution of the program may be performed by storing the program in a storage of an external server and sending the program from the external server to another computer. Further, the program may be provided as a program product.

Some or all of the functions of the information processing device 10 may be realized by a dedicated circuit corresponding to the control unit 11. That is, some or all of the functions of the information processing device 10 may be realized by hardware.

### Configuration of Terminal Device 20

As shown in FIG. 1, the terminal device 20 includes a control unit 21, a storage unit 22, an input unit 23, an output unit 24, and a communication unit 25.

The control unit 21 includes at least one processor, at least one dedicated circuit, or a combination of them. The processor is a general-purpose processor, such as a central processing unit (CPU) or a graphics processing unit (GPU), or a dedicated processor for a particular process. For example, the dedicated circuit is a field-programmable gate array (FPGA) or an application specific integrated circuit (ASIC). The control unit 21 executes processes about the operation of the terminal device 20, while controlling parts of the terminal device 20.

The storage unit 22 includes at least one semiconductor memory, at least one magnetic memory, at least one optical memory, or a combination of at least two kinds of them. For example, the semiconductor memory is a random access memory (RAM) or a read only memory (ROM). For example, the RAM is a static random access memory (SRAM) or a dynamic random access memory (DRAM). For example, the ROM is an electrically erasable programmable read only memory (EEPROM). For example, the storage unit 22 functions as a main storage device, an auxiliary storage device, or a cache memory. The storage unit 22 stores data that is used for the operation of the terminal device 20 and data that is obtained by the operation of the terminal device 20.

The input unit 23 includes at least one input interface. Examples of the input interface include a physical key, an electrostatic capacitance key, a pointing device, and a touch screen that is provided integrally with a display. Further, the input interface may be a sound sensor that accepts a voice input, or a camera that accepts a gesture input, for example. The input unit 23 accepts a manipulation for inputting data that is used for the operation of the terminal device 20. The input unit 23 may be connected to the terminal device 20, as an external input apparatus, instead of being included in the terminal device 20. As the connection method, for example, an arbitrary method, such as Universal Serial Bus (USB), High-Definition Multimedia Interface (HDMI (registered trademark)), or Bluetooth (registered trademark), can be used.

The output unit 24 includes at least one output interface. Examples of the output interface include a display that outputs information as a picture and a speaker that outputs information as a voice. Examples of the display include a liquid crystal display (LCD) and an organic electroluminescence (EL) display. The output unit 24 outputs data that is obtained by the operation of the terminal device 20. The output unit 24 may be connected to the terminal device 20, as an external output apparatus, instead of being included in the terminal device 20. As the connection method, for example, an arbitrary method, such as USB, HDMI (registered trademark), or Bluetooth (registered trademark), can be used.

The communication unit 25 includes at least one exterior communication interface. The communication interface may be an interface for wire communication or may be an interface for wireless communication. In the case of wire communication, examples of the communication interface include a Local Area Network (LAN) interface and a Universal Serial Bus (USB) interface. In the case of wireless communication, examples of the communication interface include an interface that complies with a mobile communication standard, such as, Long Term Evolution (LTE), 4th generation (4G) or 5th generation (5G), and an interface that complies with a short-range wireless communication, such as Bluetooth (registered trademark). The communication unit 25 receives data that is used for the operation of the terminal device 20, and sends data that is obtained by the operation of the terminal device 20.

Functions of the terminal device 20 are realized by executing a program according to the embodiment by a processor corresponding to the control unit 21. That is, the functions of the terminal device 20 are realized by software. The program causes a computer to function as the terminal device 20, by causing the computer to execute the operation of the terminal device 20. That is, the computer functions as the terminal device 20, by executing the operation of the terminal device 20 in accordance with the program.

Some or all of the functions of the terminal device 20 may be realized by a dedicated circuit corresponding to the control unit 21. That is, some or all of the functions of the terminal device 20 may be realized by hardware.

### Operation of Information Processing Device 10

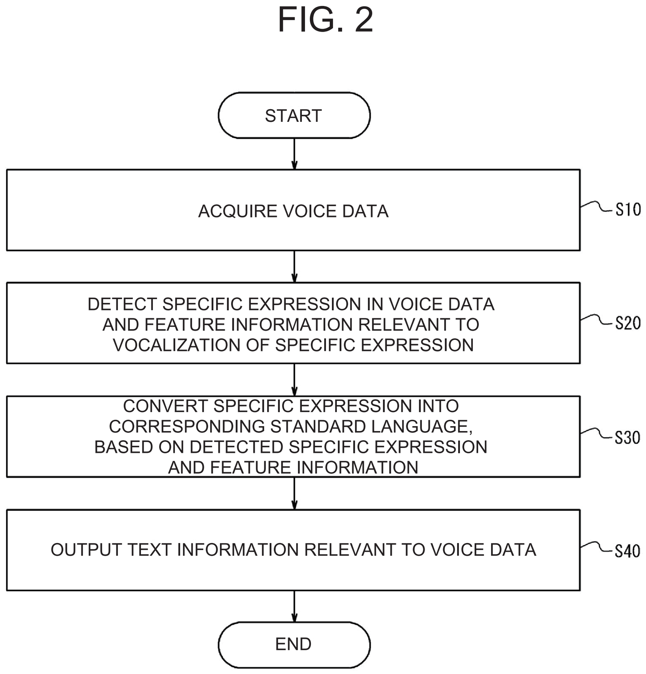

The operation of the information processing device 10 according to the embodiment will be described with reference to FIG. 2. An example in which the voice data is voice data relevant to the business talk and the business talk is a business talk relevant to vehicle sale will be mainly described.

Step S10: The control unit 11 of the information processing device 10 acquires the voice data.

In the process of acquiring the voice data, an arbitrary technique can be employed. For example, the control unit 11 may acquires the voice data from an external device including the terminal device 20, through the communication unit 15 and the network 30. Further, for example, the control unit 11 may acquire the voice data through the input unit 13.

Step S20: The control unit 11 detects the specific expression in the voice data acquired in step S10 and the feature information relevant to vocalization of the specific expression.

The specific expression includes a specified expression that is used in the actual speech, as exemplified by dialect and slang.

In the process of detecting the specific expression in the voice data, an arbitrary technique can be employed. For example, a technique in which keywords, phrases, and others registered as the specific expression in advance are collated using a voice recognition engine may be employed. Further, for example, a technique in which a voice pattern is classified and a predetermined expression is identified using a model for machine learning, such as deep learning, may be employed.

Examples of the feature information relevant to the vocalization of the specific expression include the voice tone relevant to the vocalization of the specific expression, the rhythm of the pronunciation, the fluctuation in pitch, and the vocalization speed. The feature information often reflects the vocal habit, emotion, and intention of the speaking person, and is thought to be important for exactly knowing how the specific expression has been pronounced. In the process of detecting the feature information relevant to the vocalization of the specific expression, an arbitrary technique can be employed. For example, a technique in which the fluctuation in voice tone is analyzed using a pitch detection algorithm may be employed. Further, for example, a technique in which the temporal feature and frequency feature of a voice signal are extracted using spectrogram analysis or the like may be employed. Further, for example, the feature information relevant to the vocalization may be detected by comprehensively knowing the feature of the voice using a model for machine learning, such as deep learning.

Step S30: The control unit 11 converts the specific expression into corresponding standard language, based on the detected specific expression and feature information.

In the process of the conversion into the standard language, an arbitrary technique may be employed. For example, the control unit 11 may convert the specific expression into the standard language, based on a pair of the detected specific expression and feature information and a conversion rule between non-standard language and standard language. For example, the conversion rule may be stored in the storage unit 12, and the control unit 11 may execute the above conversion process, by referring to the conversion rule in the storage unit 12. In this case, the conversion rule may be a conversion table between the pair of the specific expression and the feature information and the corresponding standard language. The corresponding standard language is the standard language into which the specific expression should be converted. In other words, the corresponding standard language is a linguistic expression that is obtained as the result of the conversion process.

Step S40: The control unit 11 outputs text information relevant to the voice data.

The text information is information in which the voice data has been converted into a text, and is information in which the above-described specific expression in the voice data has been converted into the standard language. In other words, the output text information is a standard language sentence that is obtained as the result of the voice recognition, and is a text after the detection of the specific expression and the process of the conversion into the standard language. For example, for "this road is tomenko" that is voice data including the dialect in Aichi Prefecture, the control unit 11 outputs the text information "this road is a closed road", using the conversion rule, based on the specific expression "tomenko" and the voice tone. The word "tomenko" is a dialect word in Aichi Prefecture that means "closed road". Further, for example, for "Servo" that is the voice data including the English dialect in Australia, the control unit 11 outputs the text information "Service station (Gas station)", using the conversion rule, based on the specific expression "Servo" and the voice tone. The word "Servo" is an English dialect word in Australia that means "Service station". Furthermore, a character "a" that is pronounced as "e 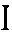 " in standard English is pronounced as "a 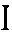 " in Australian English. For example, a character "today" is pronounced as "t 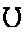 da 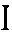 ". A character "say" is pronounced as "sa 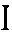 ". A character "face" is pronounced as "fa 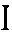 s". To the difference in pronunciation also, the conversion rule based on the specific expression and the voice tone is applied, so that the specific expression is converted and "today", "say", "face", or the like is output. In this way, even when the specific expression is dialect, locution, or the like that is used in a different region or culture, the specific expression is converted into the standard language by using an appropriate conversion rule, and thereby, the text information is provided so as to be understandable by a wider range of users.

In the process of outputting the text information, an arbitrary technique can be employed. For example, the control unit 11 may send the data to the terminal device 20 through the communication unit 15, and the output unit 24 of the terminal device 20 may output the determination result through a user interface that performs display output. Alternatively, the control unit 11 may cause the output unit 14 to output the determination result through a user interface that performs display output.

In this configuration, the information processing device 10 detects the specific expression in the voice data and the feature information relevant to the vocalization of the specific expression, and converts the specific expression into the standard language, based on the detected specific expression and feature information. Therefore, since the specific expression can be appropriately extracted and can be converted into the standard language, the text conversion technology for voice data is improved.

The present disclosure has been described based on the drawings and examples. Note that a person skilled in the art can perform various modifications and alterations based on the present disclosure. Accordingly, it is noted that the modification and the alterations are included in the scope of the present disclosure. For example, functions and others included in constituent units, steps and others can be reallocated such that there is no logical inconsistency, and a plurality of constituent units, steps and others can be combined to one, or can be divided.

For example, the voice data may be voice in a business talk relevant to a predetermined provision object, and the control unit 11 of the information processing device 10 may specify regionality information corresponding the speaking person, from the voice data. In this case, the control unit 11 may present a suggestion relevant to the predetermined provision object, based on the regionality information. For example, for the voice data including the specific expression "ketta" that is a dialect word in Aichi Prefecture, the control unit 11 converts the voice data into the standard language based on the expression "ketta" and the voice tone, and outputs the text information "bicycle". The word "ketta" is a dialect word in Aichi Prefecture that means "bicycle". The regionality information for the Aichi region includes information indicating that it is general to load a bicycle in a vehicle. In this case, the control unit 11 may propose a vehicle (e.g.: a minivan, an SUV, or the like) having a large load capacity, based on the regionality information and the conversion process. Further, for example, for the voice data including the specific expression "barihaee" that is a dialect word in Fukuoka Prefecture, the control unit 11 converts the voice data into the standard language based on the expression "bari" and voice tone, and outputs the text information "very fast". The word "bari" is a dialect word in Fukuoka Prefecture that means "very". The word "haee" is a non-standard language word that means "fast". The regionality information for the Fukuoka region includes information indicating that the frequency of use of expressways is high. In this case, the control unit 11 may propose a vehicle (e.g.: a hybrid electric vehicle, a sports sedan, or the like) having a good fuel efficiency, vehicle acceleration, and high-speed running performance, based on the regionality information and the conversion process. By considering the regionality information in this way, it is possible to make a useful proposal that is more appropriate to the user, so that the enhancement in the efficiency of the business talk is expected. In the specification of the regionality information, an arbitrary technique may be employed. For example, a technique in which the regionality of the speaking person is identified using a voice recognition engine, based on the specific expression included in the voice data, a dialect list, and others may be employed.

For example, in the above-described embodiment, the configuration and operation of the information processing device 10 may be distributed among a plurality of computers that can communicate with each other.

Some embodiments of the present disclosure will be shown below as examples. Note that embodiments of the present disclosure are not limited to these.

### Supplement 1

A text conversion method for voice data that is executed by an information processing device, the text conversion method including: acquiring voice data; detecting a specific expression in the voice data and feature information relevant to vocalization of the specific expression; converting the specific expression into corresponding standard language, based on the detected specific expression and the detected feature information; and outputting text information relevant to the voice data.

### Supplement 2

The text conversion method according to supplement 1, further including converting the specific expression into the corresponding standard language, based on a pair of the detected specific expression and the detected feature information and a conversion rule between non-standard language and standard language.

### Supplement 3

The text conversion method according to supplement 1 or 2, wherein the feature information relevant to the vocalization is voice tone information.

### Supplement 4

The text conversion method according to any one of supplements 1 to 3, wherein the specific expression includes dialect and slang.

### Supplement 5

The text conversion method according to any one of supplements 1 to 4, wherein: the voice data is voice in a business talk relevant to a predetermined provision object; and the text conversion method includes specifying regionality information corresponding to a speaking person, from the voice data, and presenting a suggestion relevant to the predetermined provision object, based on the regionality information.

### Supplement 6

An information processing device including one or more processors configured to: acquire voice data; detect a specific expression in the voice data and feature information relevant to vocalization of the specific expression; convert the specific expression into corresponding standard language, based on the detected specific expression and the detected feature information; and output text information relevant to the voice data.

### Supplement 7

A non-transitory storage medium storing instructions that are executable by one or more processors and that cause the one or more processors to perform functions including: acquiring voice data; detecting a specific expression in the voice data and feature information relevant to vocalization of the specific expression; converting the specific expression into corresponding standard language, based on the detected specific expression and the detected feature information; and outputting text information relevant to the voice data.

## Claims

1. A text conversion method for voice data that is executed by an information processing device, the text conversion method comprising:
acquiring voice data;
detecting a specific expression in the voice data and feature information relevant to vocalization of the specific expression;
converting the specific expression into corresponding standard language, based on the detected specific expression and the detected feature information; and
outputting text information relevant to the voice data.

2. The text conversion method according to claim 1, further comprising converting the specific expression into the corresponding standard language, based on a pair of the detected specific expression and the detected feature information and a conversion rule between non-standard language and standard language.

3. The text conversion method according to claim 1, wherein the feature information relevant to the vocalization is voice tone information.

4. The text conversion method according to claim 1, wherein the specific expression includes dialect and slang.

5. The text conversion method according to claim 1, wherein:
the voice data is voice in a business talk relevant to a predetermined provision object; and
the text conversion method includes
specifying regionality information corresponding to a speaking person, from the voice data, and
presenting a suggestion relevant to the predetermined provision object, based on the regionality information.

6. An information processing device (10) comprising one or more processors configured to:
acquire voice data;
detect a specific expression in the voice data and feature information relevant to vocalization of the specific expression;
convert the specific expression into corresponding standard language, based on the detected specific expression and the detected feature information; and
output text information relevant to the voice data.

7. A non-transitory storage medium storing instructions that are executable by one or more processors and that cause the one or more processors to perform functions comprising:
acquiring voice data;
detecting a specific expression in the voice data and feature information relevant to vocalization of the specific expression;
converting the specific expression into corresponding standard language, based on the detected specific expression and the detected feature information; and
outputting text information relevant to the voice data.
